# EUROPEAN PATENT APPLICATION

(11) **EP 1 103 453 A2**
(43) Date of publication of application: **30.05.2001**
(21) Application number: 00310374.4
(22) Date of filing: 22.11.2000
(51) Int. Cl.: B62H 5/00

(54) **Telescopic anti-theft device for two-wheeled vehicles**

(30) Priority: 25.11.1999 GB 9927773
(71) Applicant: McMellon, Gary Alexander, Solihull B91 2NR (GB)
(72) Inventor: McMellon, Gary Alexander, Solihull B91 2NR (GB)

(57) **Abstract**

An anti-theft device for a two-wheeled motorcycle or scooter, 10, that uses a pivotally attached central stand, 12, comprising a telescopic strut, 20, one end of which is pivotally attached, 26, to the vehicle frame, 14, and the other end pivotally attached, 42, to the central stand, 12, the telescopic strut, 20, is provided with a transverse releasable key lockable assembly means, 50, for locking the telescopic strut, 20, when the stand is in the lowered position.

**USES:** An anti-theft device for two-wheeled vehicles - motorcycles and motor scooters provided with a central stand enabling locking the stand in the down position, thereby preventing theft by driving away, or wheeling away.

## Description

The present invention relates to an anti-theft device for two-wheeled vehicles and in particular for motorcycles or motor scooters.

Devices are known by which the central stand of a motorcycle or motor scooter may be locked in the down position, thereby prevention the motorcycle or scooter from being driven or wheeled away. Generally such systems involve the use of components, for example locks and/or clamping bars, which are separate from the motorcycle or scooter and consequently presents stowage problems when not in use. Furthermore, these systems are often difficult to fit which is a disincentive to their use, particularly when the motorcycle or scooter is only to be left unattended for a short period.

The present invention provides an improved anti-theft device for a two-wheeled vehicle, which is telescopic, mounted integrally of the vehicle and easy to use.

According to one aspect of the present invention, an anti-theft device for a two-wheeled vehicle that uses a central stand, (the central stand being pivotally attached to the vehicle frame for movement between a raised position in which it is clear of the ground, and a lowered position in which it engages the ground to lift a wheel clear off the ground), comprises a telescopic strut being pivotally attached at one end to the vehicle frame and at the other end to the central stand, the distance between the position at which the telescopic strut is attached to the vehicle and the position at which it is attached to the stand, varying between the raised and lowered positions of the stand, and releasable locking means being provided integrally of the telescopic strut, for locking the telescopic strut when the stand is in the lowered position.

According to a preferred embodiment of the invention, the locking means comprises a push bolt lock assembly, which is formed integrally of one part of the telescopic strut, so that it may be moved into engagement with the other part of the strut to lock the strut. The bolt may be unlocked by suitable key means.

Preferably, the push bolt is pushed in to lock the strut, the bolt being biased outwardly so that it will spring out to unlock the strut upon release by a suitable key means. Alternatively, the push bolt may be biased to automatically lock the strut when the stand reaches its lowered position.

The anti-theft device of the present invention will consequently constitute an integral part of the vehicle which may easily be operated when the vehicle stand is lowered, thereby overcoming many of the drawbacks of the anti-theft devices of this type proposed hitherto. Furthermore, the telescopic strut is arranged substantially parallel to the central stand of the vehicle and is self-contained, requiring only anchorage points on the vehicle and the stand. The anti-theft device may consequently be fitted either as original equipment or retro-fitted, without packaging problems and the requirement to carry out extensive modifications to the vehicle.

Preferably, the telescopic strut is fitted to the vehicle and stand, such that the strut reduces in length as the stand moves between its raised and lowered positions.

All the components of the strut and attachments to the vehicle and stand are preferably all made of hardened steel, shear/security bolts or similar means being used to secure the components.

### REFERENCE TO DRAWINGS

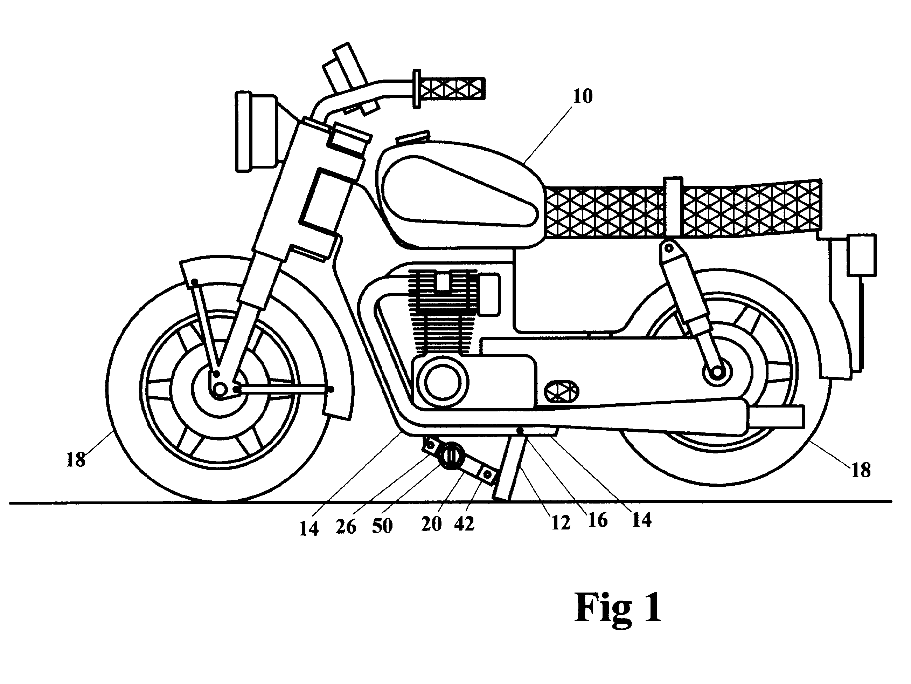

An embodiment of the inventions is now described by way of example only, with reference to the accompanying drawings, in which:-
Figure 1 shows a side elevation of a motorcycle with anti-theft device in accordance with the present invention, the stand being shown in its lowered position;
Figure 2 shows a perspective view of the anti-theft device illustrated in Figure 1, with the stand in its lowered position;
Figure 3 shows a side elevation of the anti-theft device illustrated in figure 1, with the stand in its raised position;

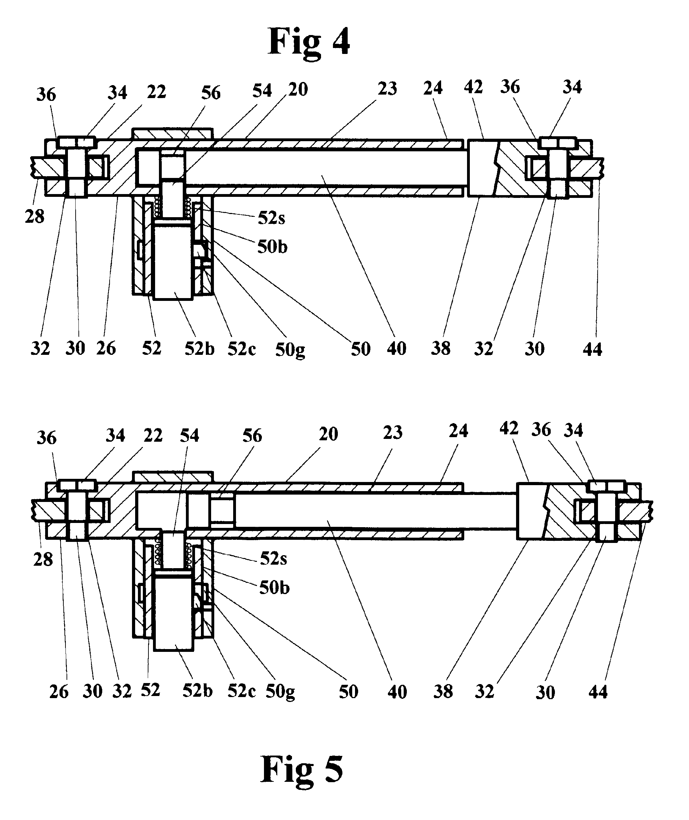

Figure 4 shows a section through the telescopic strut of the anti-theft device illustrated in figure 1, showing the strut in its locked position; and
Figure 5 shows a section through the telescopic strut of the anti-theft device illustrated in figure 1, showing the strut in its unlocked released position.

### DESCRIPTION

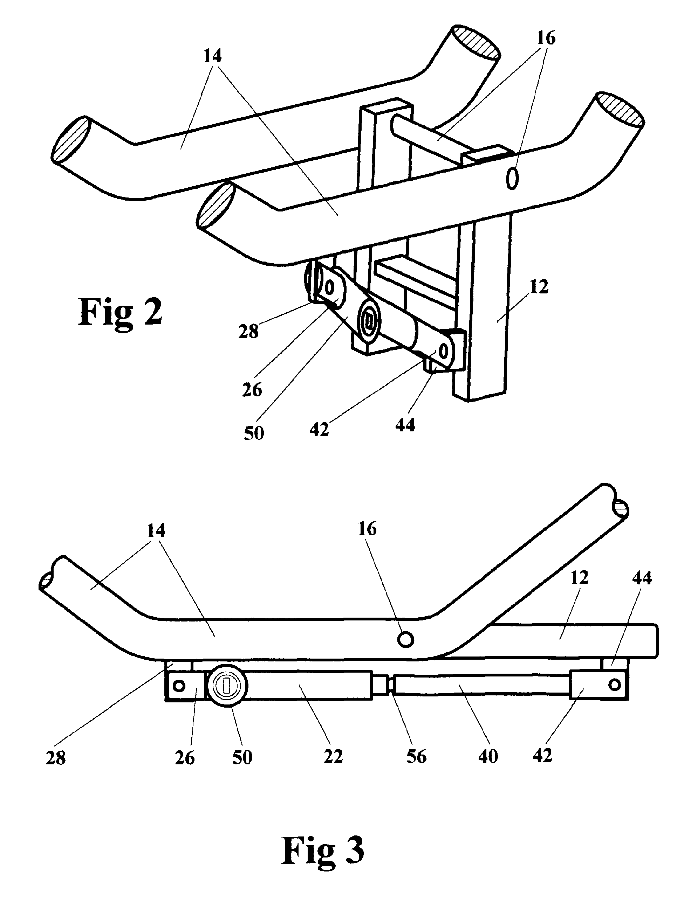

As illustrated in the accompanying drawings, a motorcycle, 10, has a central stand, 12, which is pivotally attached to a frame, 14, of the motorcycle, 10, about a pivot, 16. The stand, 12, is pivotal about pivot, 16, between raised position as illustrated in Figure 3, in which the stand, 12, extends rearwardly and substantially parallel to the frame, 14, of the motorcycle, 10, an a lowered position (as illustrated in Figure 2) in which the stand, 12, extends forwardly and downwardly. In the lowered position illustrated in Figure 2, the stand, 12, will engage the ground raising one of the wheels, 18, of the motorcycle, 10, clear of the ground. As a consequence, with the stand, 12, in its lowered position the motorcycle, 10, may not be ridden or wheeled.

A telescopic strut, 20, is pivotally attached at one end, 26, to the motorcycle frame, 14, forwardly of the pivot, 16; and at the other end, 42, to the stand, 12, at a position remote from the pivot, 16. As illustrated in greater detail in Figure,4, the telescopic strut, 20, comprises a first part, 22, having a closed bore, 23, extending from one end, 24. The closed end, 26, of part, 22, is slotted and engages a lug, 28, welded or securely fixed in other suitable manner to the motorcycle frame, 14. Part, 22, of the strut, 20, is pivotally secured to the lug, 28, by means of a shear bolt, 30, which passes through an aperture in the lug, 28, and engages a screw threaded bore, 32. The head, 34, of the shear bolt, 30, engages a recess, 36, in part, 22, for added security.

A second part, 38, of the strut, 20, comprises a rod formation, 40, which slidingly engages in the bore, 23, of part, 22, in telescopic manner. The end, 42, of part, 38, is forked in similar manner to the, 26, of part, 22, and is secured to a lug, 44, on the stand, 12, in similar manner.

A push bolt lock assembly, 50, is mounted with respect to the first part, 22, of strut, 20, transverse thereto, adjacent to the end, 26. The push bolt lock assembly, 50, has bore, 50b, having an interference fitted barrel sleeve, 52, containing a key lockable barrel bolt, 52b, slidingly mounted for limited axial movement, transverse to the strut, 40, the key lockable barrel bolt, 52b, is biased outwardly by a piston, 54, and bias spring, 52s. A necked formation, 56, is provided on the rod, 40, which is engaged by the piston, 54, mounted inside the barrel sleeve, 52, by pushing the key lockable barrel bolt, 52b, inwardly when the strut, 12, is in its lowered position thereby locking the strut, 20. The key lockable barrel bolt, 52b, is provided with a catch, 52c, which engages a rectangular groove, 50g, in the bore, 50b, which is released by means of a suitable key so that key lockable barrel bolt, 52b, is biased outwardly, disengaging the piston, 54, from the necked formation, 56, permitting extension of the strut, 20, so that the stand, 12, may be moved from its lowered position to its raised position.

Preferably, the pivotal connections between the strut, 20, and lugs, 28 and 44, in addition to permitting pivotal movement also permit a degree of lateral movement, in order to accommodate any axial misalignment of the pivots.

Various modifications may be made without departing from the invention. For example, while in the above embodiment the lugs, 28 and 44, engage forked ends, 26 and 42, of the strut, 20, the ends of strut, 20, may engage between a pair of lugs or may be pivotally attached to a single lug or member from the side.

## Claims

1. An anti-theft device for a two-wheeled vehicle that uses a central stand, (the central stand being pivotally attached to the vehicle frame for movement between a raised position in which it is clear of the ground, and a lowered position in which it engages the ground to lift a wheel off the ground), comprising a telescopic strut being pivotally attached at one end to the vehicle and at the other end to the central stand, the distance between the position of which the telescopic strut is attached to the vehicle and the position at which it is attached to the stand varying between the raised and lowered positions of the stand, and releasable locking means being provided integrally of the telescopic strut, for locking the telescopic strut when the stand is in the lowered position.

2. An anti-theft device according to claim 1, in which locking means is a push-bolt lock.

3. An anti-theft device according to Claim 2, in which the push-bolt lock is biased outwardly so that it may be pushed in to lock the strut.

4. An anti-theft device according to Claim 2, in which the push-bolt lock is arranged to lock automatically when the stand is moved to its lowered position.

5. An anti-theft device according to any one of the preceding claims in which the telescopic strut is secured to the vehicle and the stand such that the strut reduces in length as the stand moves between its raised and lowered positions.

6. An anti-theft device according to any one of the preceding claims in which the strut is pivotally attached to the vehicle and/or stand, so as to permit a degree of lateral compliance in order to accommodate axial misalignment between the pivot points to the vehicle and stand.

7. An anti-theft device substantially as described herein with reference to and as shown in Figures 1 to 4 of the accompanying drawings.
